# EUROPEAN PATENT SPECIFICATION

(11) **EP 3 616 560 B1**
(45) Date of publication and mention of the grant of the patent: **26.07.2023**
(21) Application number: 19204029.3
(22) Date of filing: 12.12.2016
(51) Int. Cl.: A46B 3/00, A46B 9/04, A46D 1/00

(54) **ORAL CARE IMPLEMENT**
MUNDPFLEGEGERÄT
INSTRUMENT DE SOINS BUCCAUX

(30) Priority: 14.12.2015 US 201514968607
(43) Date of publication of application: 04.03.2020
(62) Divisional of application: 16822846.8
(73) Proprietor: Colgate-Palmolive Company, New York, NY 10022 (US)
(72) Inventor: MOSKOVICH, Robert A., Manakin-Sabot,, VA Virginia 23103 (US)
(74) Representative: Schicker, Silvia

(56) References cited:
- US-A- 2 225 331
- US-A- 4 128 910
- US-A- 6 161 243
- US-A1- 2005 160 546

## Description

### CROSS-REFERENCE TO RELATED PATENT APPLICATIONS

This application claims priority to United States Patent Application Serial No. 14/968,607, filed December 14, 2015.

### BACKGROUND

Conventional toothbrushes include a head with tooth cleaning elements thereon. In typical toothbrushes, the tooth cleaning elements are bristles formed of nylon or a similar filament material. Due to the small diameter of such nylon bristles, a toothbrush may include thousands of discrete bristles arranged in tufts and coupled to the head, each of the discrete bristles forming a distinct end point for cleaning. Recently, toothbrushes have been manufactured with the bristles formed via injection molding. In such toothbrushes, the bristles are much larger than conventional filament bristles and as a result there are many fewer bristles on the head, which results in fewer end points for cleaning. In toothbrushes using this newer technology, the number of distinct end points on the bristles that may contact a user's teeth and other oral surfaces during toothbrushing is significantly reduced relative to conventional toothbrushes that use filament bristles. Thus, a need exists for a toothbrush having injection molded bristles with an increased number of contact points for more effectively cleaning a user's teeth and other oral surface.
US 2,225,331 A relates to a toothbrush consisting of a handle having at one end a receptacle with bevelled undercut walls, and a flexible bristle pad, a base of said pad conforming exactly to the inside dimensions of said receptacle.
US 6,161,243 A relates to a toothbrush having a head and a handle, wherein bristles in the form of bundles are fixed to the head. The bundles comprise a plurality of plastic bristles, wherein a single bristle from a bundle comprises a circular cylindrical core, on whose circumferential surface is provided a two-pitch helix with two helixes. The bristle can be manufactured in different ways. For example, a monofilament can be extruded, stretched, twisted and finally heat fixed with a core and two diametrically positioned ribs, so as to give a two-pitch helix. In other embodiments, the circular cylindrical cores are co-extruded with the ribs. The extruded monofilament or the co-extruded composite is then stretched, twisted and heat stabilized.
US 4,128,910 A relates to a toothbrush comprising a handle and a brushing structure which is indirectly secured to the handle through a frame member. In one embodiment, the brushing structure has laterally extending fin-shaped projections, having tapering tips, and disposed in spaced-apart arrangement in a longitudinal direction of the toothbrush.
US 2005/0160546 A1 relates to a bristle which can be used in particular for hygiene brushes such as toothbrushes. The bristle has a lower substantially truncated root region which serves for connecting to or into a bristle support or bristle body or which is part of the bristle support itself. Above the root region, the bristle comprises a protruding free length which projects past the bristle support after mounting the bristle. The free length of the bristle is divided into two main regions, a shaft region and a flexing region, wherein the shaft region directly borders the root region and the flexing region joins above the shaft region. Along its free length, the bristle has a conically tapering enveloping surface. A profiling is formed in the flexing region, with the bristle having a crossed cross-section in this location to form four axial ribs which are distributed about the circumference, which are rounded at their outer sides, and which extend up to the free end of the bristle.

### BRIEF SUMMARY

The present invention is directed to an oral care implement as defined in claim 1. Preferred embodiments are defined by the dependent claims. An oral care implement includes a handle and a head. The head comprises a support structure and a monolithic cleaning unit coupled thereto. The monolithic cleaning unit includes a base portion coupled to the support structure and a plurality of bristles extending therefrom. At least one, or each, of the plurality of bristles comprises a body having an outer surface and a rib extending from the outer surface. The rib is longitudinally elongated. Furthermore, there are more than one rib extending from the outer surface of the body. The monolithic cleaning unit may be formed of an elastomeric material.

In one aspect of the present disclosure, an oral care implement may comprise a handle and a head having a front surface and an opposing rear surface, the head comprising a support structure and a monolithic cleaning unit, the monolithic cleaning unit comprising: a base portion coupled to the support structure and forming a portion of the front surface of the head; and a plurality of bristles extending from the base portion and protruding from the front surface of the head; wherein at least one of the plurality of bristles comprises: a body having an outer surface that extends along a longitudinal axis from a proximal end that is adjacent the base portion of the monolithic cleaning unit to a distal end that is spaced from the front surface of the head; and a plurality of longitudinally elongated ribs extending from the outer surface of the body in a circumferentially spaced apart manner.

In another aspect of the present disclosure, an oral care implement may comprise a handle and a head having a front surface and an opposing rear surface, the head comprising a support structure and a monolithic cleaning unit, the monolithic cleaning unit comprising: a base portion coupled to the support structure and forming a portion of the front surface of the head; and a plurality of bristles extending from the base portion and protruding from the front surface of the head; wherein at least one of the plurality of bristles comprises: a body having an outer surface, the body extending along a longitudinal axis and having a length measured between a proximal end that is adjacent the base portion of the monolithic cleaning unit and a distal end that is spaced from the front surface of the head; and at least one longitudinally elongated rib extending from the outer surface of the body along a majority of the length of the body.

In yet another aspect of the present disclosure, an oral care implement may comprise a handle and a head having a front surface and an opposing rear surface, the head comprising a support structure and a monolithic cleaning unit, the monolithic cleaning unit comprising: a base portion coupled to the support structure and forming a portion of the front surface of the head; and a plurality of bristles extending from the base portion and protruding from the front surface of the head; wherein at least one of the plurality of bristles comprises: a body having an outer surface, the body extending along a longitudinal axis and having a first longitudinal section extending from a proximal end adjacent the base portion of the monolithic cleaning unit to a distal end and a second longitudinal section extending from the distal end of the first longitudinal section to a distal end of the second longitudinal section, the first longitudinal section having a minimum diameter that is greater than a maximum diameter of the second longitudinal section; and at least one rib extending from the outer surface of the body and located entirely on the second longitudinal section of the body.

In still another aspect of the present disclosure, an oral care implement may comprise a handle and a head having a front surface and an opposing rear surface, the head comprising a support structure and a monolithic cleaning unit, the monolithic cleaning unit comprising: a base portion coupled to the support structure and forming a portion of the front surface of the head; and a plurality of bristles extending from the base portion and protruding from the front surface of the head; wherein at least one of the plurality of bristles comprises: a cylindrical body extending along a longitudinal axis from a proximal end that is adjacent the base portion of the monolithic cleaning unit to a distal end, the cylindrical body tapering from the proximal end to the distal end; and at least one rib extending from an outer surface of the cylindrical body, a height that the at least one rib extends from the outer surface of the cylindrical body increasing with distance from the proximal end of the cylindrical body towards the distal end of the cylindrical body.

In a further aspect of the present disclosure, an oral care implement may comprise a handle and a head having a front surface and an opposing rear surface, the head comprising a support structure and a monolithic cleaning unit, the monolithic cleaning unit comprising: a base portion coupled to the support structure and forming a portion of the front surface of the head; and a plurality of bristles extending from the base portion and protruding from the front surface of the head; wherein at least one of the plurality of bristles comprises: a body having an outer surface that extends along a longitudinal axis from a proximal end that is adjacent the base portion of the monolithic cleaning unit to a distal end; and at least one rib extending from the outer surface of the body in a helical manner about the longitudinal axis.

In a still further aspect of the present disclosure, an oral care implement may comprise: a handle and a head having a front surface and an opposing rear surface, the head comprising a support structure and a monolithic cleaning unit, the monolithic cleaning unit comprising: a base portion coupled to the support structure and forming a portion of the front surface of the head; and a plurality of bristles extending from the base portion and protruding from the front surface of the head; wherein at least one of the plurality of bristles comprises a body extending along a longitudinal axis, the body having a first longitudinal section extending from the base portion of the monolithic cleaning unit to a distal end and a second longitudinal section extending from the distal end of the first longitudinal section, the distal end of the first longitudinal section protruding radially from the second longitudinal section, each of the first and second longitudinal sections of the body tapering in a direction away from the base portion of the monolithic cleaning unit.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
FIG. 1 is perspective view of an oral care implement in accordance with an embodiment of the present invention;
FIG. 2 is a close-up view of the head of the oral care implement of FIG. 1;
FIG. 3 is an exploded close-up view of the head of the oral care implement of FIG. 1 illustrating a support structure and a monolithic cleaning unit;
FIG. 4A is a cross-sectional view taken along line IV-IV of FIG. 1;
FIG. 4B is an alternative cross-sectional view taken along line IV-IV of FIG. 1;
FIG. 5 is a perspective view of a bristle of the monolithic cleaning unit in accordance with an example useful for understanding the present invention;
FIGS. 6A-6B are perspective views of bristles of in accordance with another example useful for understanding the present invention;
FIGS. 7A-7D are perspective views of bristles in accordance with an embodiment of the present invention;
FIGS. 8A-8D are perspective views of bristles in accordance with still another example useful for understanding the present invention;
FIG. 9A-9D is a perspective view of a bristle in accordance with a further example useful for understanding the present invention;
FIGS. 10A-10C are perspective views of bristles in accordance with a still further example useful for understanding the present invention; and
FIGS. 11A-11E are perspective views of bristles in accordance with another example useful for understanding the present invention.

### DETAILED DESCRIPTION

The following description of the preferred embodiment(s) and examples useful for understanding the invention is merely exemplary in nature and is in no way intended to limit the invention, its application, or uses.

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivatives thereof (e.g., "horizontally,""downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the invention are illustrated by reference to the exemplified embodiments. Accordingly, the invention expressly should not be limited to such exemplary embodiments illustrating some possible non-limiting combination of features that may exist alone or in other combinations of features; the scope of the invention being defined by the claims appended hereto.

As used throughout, ranges are used as shorthand for describing each and every value that is within the range. Any value within the range can be selected as the terminus of the range. In addition, in the event of a conflict in a definition in the present disclosure and that of a cited reference, the present disclosure controls.

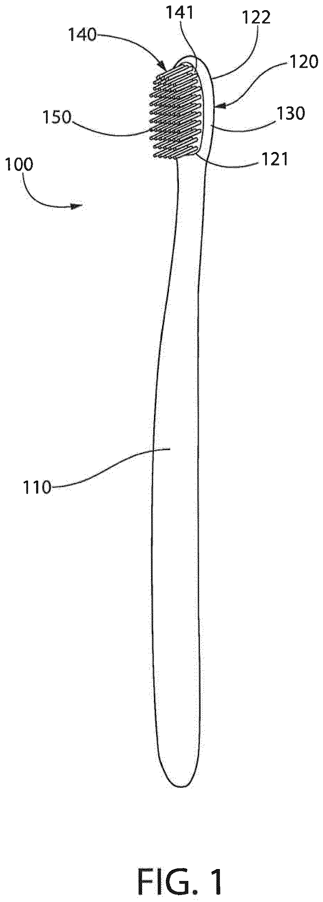

Referring to FIG. 1, an oral care implement 100 will be described in accordance with an embodiment of the present application. In the exemplified embodiment, the oral care implement 100 is in the form of a manual toothbrush. However, in certain other embodiments the oral care implement 100 can take on other forms such as being a powered toothbrush, a tongue scraper, a gum and soft tissue cleanser, a water pick, an interdental device, a tooth polisher, a specially designed ansate implement having cleaning elements, or any other type of implement that is commonly used for oral care.

The oral care implement 100 generally comprises a handle 110 and a head 120. The handle 110 is an elongated structure that provides the mechanism by which the user can hold and manipulate the oral care implement 100 during use. In the exemplified embodiment, the handle 110 is generically depicted having various contours for user comfort. Of course, the invention is not to be limited by the specific shape illustrated for the handle 110 in all embodiments and in certain other embodiments the handle 110 can take on a wide variety of shapes, contours, and configurations, none of which are limiting of the present invention unless so specified in the claims.

The handle 110 may be formed of a hard or rigid plastic material, such as for example without limitation polymers and copolymers of ethylene, propylene, butadiene, vinyl compounds, and polyesters such as polyethylene terephthalate. The handle 110 may also include a grip that is formed of a resilient/elastomeric material, such as a thermoplastic elastomer. Such a grip may be molded over a portion of the handle 110 that is typically gripped by a user's thumb and forefinger during use. Furthermore, it should be appreciated that additional regions of the handle 110 can be overmolded with the resilient/elastomeric material to enhance the gripability of the handle 110 during use. For example, portions of the handle 110 that are typically gripped by a user's palm during use may be overmolded with a thermoplastic elastomer or other resilient material to further increase comfort to a user. Furthermore, materials other than those noted above can be used to form the handle 110, including metal, wood, or any other desired material that has sufficient structural rigidity to permit a user to grip the handle 110 and manipulate the oral care implement 100 during toothbrushing.

The head 120 of the oral care implement 100 is coupled to the handle 110 and comprises a front surface 121 and an opposing rear surface 122. In the exemplified embodiment, the head 120 is formed integrally with the handle 110 as a single unitary structure using a molding, milling, machining, or other suitable process. However, in other embodiments the handle 110 and the head 120 may be formed as separate components which are operably connected at a later stage of the manufacturing process by any suitable technique known in the art, including without limitation thermal or ultrasonic welding, a tight-fit assembly, a coupling sleeve, threaded engagement, adhesion, or fasteners. Thus, the head 120 may, in certain embodiments, be formed of any of the rigid plastic materials described above as being used for forming the handle 110, although the invention is not to be so limited in all embodiments and other materials that are commonly used during toothbrush head manufacture may also be used.

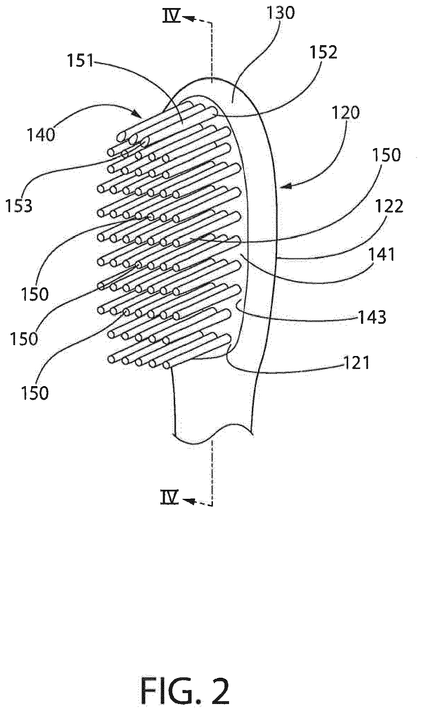

Referring to Figures 1-3 concurrently, in the exemplified embodiment the head 120 of the oral care implement 100 comprises a support structure 130 and a monolithic cleaning unit 140. The monolithic cleaning unit 140 is coupled to the support structure 130 so that the monolithic cleaning unit 140 and the support structure 130 collectively form the head 120. More specifically, the monolithic cleaning unit 140 generally comprises a base portion 141 that is coupled directly to the support structure 130 and a plurality of bristles 150 extending from the base portion 141. The base portion 141 and all of the plurality of bristles 150 are integrally formed as a single unitary structure (i.e., the monolithic cleaning unit 140). Thus, the monolithic cleaning unit 140 is a one-piece structure that is affixed to the support structure 130. In the exemplified embodiment, the monolithic cleaning unit 140 includes all of the bristles on the head 120. Thus, the head 120 does not include any bristles or other tooth cleaning elements that are not formed as an integral part of the monolithic cleaning unit 140.

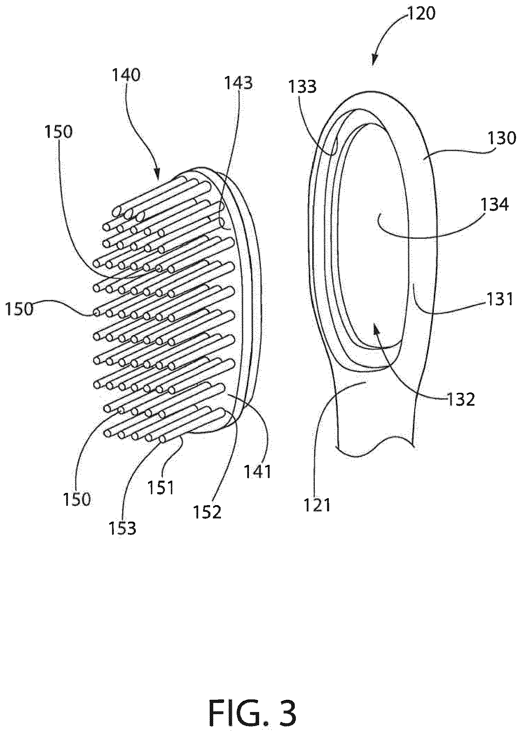

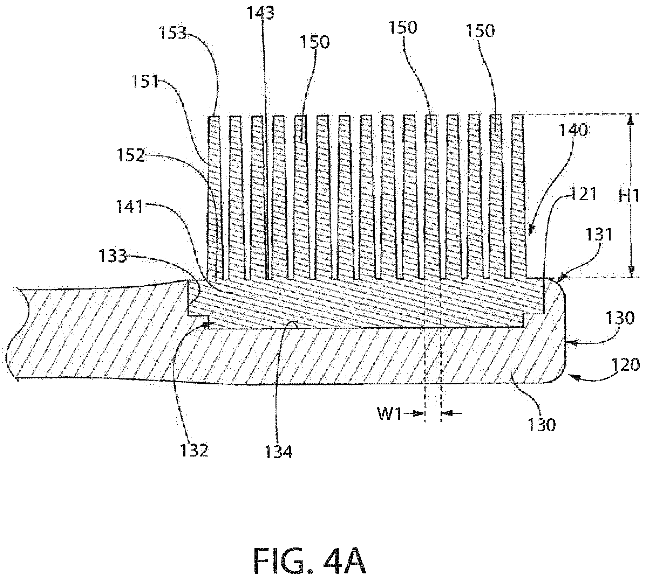

Referring to FIGS. 3 and 4A concurrently, the structure of the head 120 will be described in more detail. In this embodiment, the support structure 130 comprises a front surface 131 having a basin 132 formed therein. The basin 132 is defined by sidewalls 133 and a floor 134. The basin 132 forms a cavity within which the monolithic cleaning unit 140, and more specifically the base portion 141 of the monolithic cleaning unit 140, may be disposed.

As mentioned above, the monolithic cleaning unit 140 is an integral structure that includes both the base portion 141 and the bristles 150. Thus, all of the bristles 150 and the base portion 141 are formed integrally as a single, unitary, monolithic structure. The monolithic cleaning unit 140 may include between 200 and 250 of the bristles 150 in some embodiments, although more or less of the bristles 150 may be included in other embodiments depending on the surface area or tufting area of the head 120 and the spacing between the bristles 150. In certain embodiments the front surface 121 of the head 120 may comprise a tufting area having a bristle density of between 0.55 and 0.85 bristles per mm², although other bristle density ranges are possible in alternative embodiments. In some embodiments the head 120 may be devoid of filament bristles extending therefrom. In some embodiments the head 120 comprises tooth cleaning elements that consist only of the plurality of bristles 150 of the monolithic cleaning unit 140. Thus, in such embodiments the only tooth cleaning elements extending from the front surface 121 of the head 120 are the bristles 150 of the monolithic cleaning unit 140.

In certain embodiments the monolithic cleaning unit 140 may be formed via injection molding. Specifically, the support structure 130 of the head 120 may be positioned within a mold cavity, and a material may be injected into the mold cavity to simultaneously form the base portion 141 and the bristles 150 of the monolithic cleaning unit 140 in a single shot. The bristles 150 are preferably solid structures as illustrated in FIG. 4A and not hollow. The monolithic cleaning unit 140 and the bristles 150 thereof may be referred to herein and in the art as injection molded bristles. In certain embodiments, the monolithic cleaning unit 140 may be an integrally formed structure formed of an elastomeric material. The elastomeric material used to form the monolithic cleaning unit 140 may be thermoplastic polyurethane (TPU), thermoplastic elastomer (TPE), silicone, or the like.

In the fully formed head 120 of the embodiment depicted in Figure 4A, the base portion 141 of the monolithic cleaning unit 140 is positioned within the basin 132 of the support structure 130 and the bristles 150 of the monolithic cleaning unit 140 extend or protrude from the front surface 121 of the head 120 (and also from the front surface 131 of the support structure 130 and from a front surface 143 of the base portion 141 of the monolithic cleaning unit 140). In this embodiment, the monolithic cleaning unit 140 is coupled to the support structure 130 so that the front surface 143 of the base portion 141 of the monolithic cleaning unit 140 is flush with the front surface 131 of the support structure 130. In this way, the front surface 143 of the base portion 141 of the monolithic cleaning unit 140 and the front surface 131 of the support structure 130 collectively form the front surface 121 of the head 120. Of course, the front surface 143 of the base portion 141 of the monolithic cleaning unit 140 need not be flush with the front surface 131 of the support structure 130 in all embodiments and the front surface 143 of the base portion 141 of the monolithic cleaning unit 140 may be recessed relative to or extend beyond the front surface 131 of the support structure 130 in alternative embodiments. In some embodiments the support structure 130 may be omitted and the entire head 120 may be formed from the monolithic cleaning unit 140, which would in such embodiments be coupled directly to the handle 110 of the oral care implement 100.

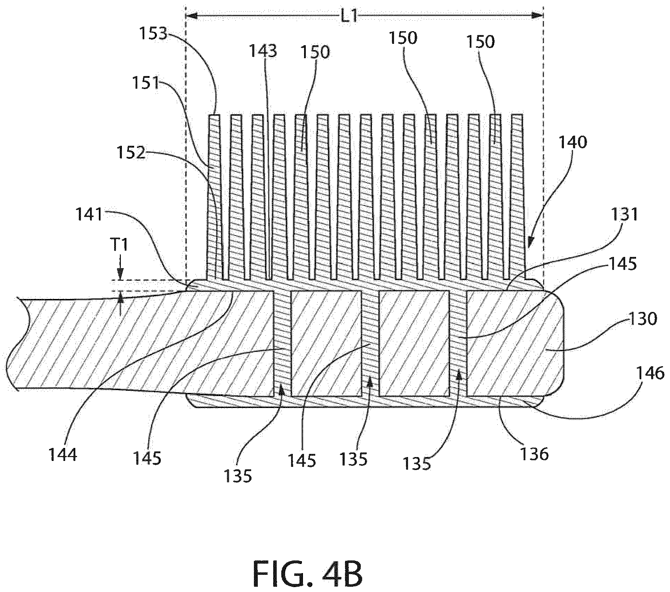

Figure 4B illustrates an alternative embodiment wherein the support structure 130 does not have a basin formed therein. Rather, in this embodiment the support structure 130 comprises one or more passageways 135 extending through the support structure 130 from the front surface 131 of the support structure 130 to a rear surface 136 of the support structure 130. In the exemplified embodiment three passageways 135 are illustrated, but more or less than three passageways 135 may be used in other embodiments. In this embodiment, the monolithic cleaning unit 140 comprises the base portion 141 and the bristles 150 extending therefrom. Additionally, the monolithic cleaning unit 140 comprises anchor portions 145 positioned within the passageways 135 of the support structure 130 and a massaging pad 146 disposed on the rear surface 136 of the support structure 130. Although not illustrated, the massaging pad 146 may include protuberances extending therefrom for cleaning a user's tongue and/or soft tissue surfaces during use of the oral care implement 100. Thus, in this embodiment the monolithic cleaning unit 140 may form both bristles for cleaning a user's teeth and a tongue/soft tissue cleaner for cleaning a user's tongue and soft tissue.

In the embodiment of Figure 4B, the base portion 141 of the monolithic cleaning unit 140 is disposed directly atop of the front surface 131 of the support structure 130. Thus, a rear surface 144 of the base portion 141 is positioned directly atop and in direct surface contact with the front surface 131 of the support structure 130. In certain embodiments, the base portion 141 of the monolithic cleaning unit 140 may have a thickness T1 measured from the rear surface 144 of the base portion 141 of the monolithic cleaning unit 140 to the front surface 143 of the base portion 141 of the monolithic cleaning unit 140 of between 0.5mm and 1.5mm, more specifically between 0.6mm and 1.0mm, and still more specifically approximately 0.8mm. Maintaining a low profile and low thickness T1 ensures that the head 120 of the oral care implement 100 will fit comfortably within a user's mouth during toothbrushing. The base portion 141 of the monolithic cleaning unit 140 may have a longitudinal length L1 of between 22mm and 30mm, more specifically between 24mm and 28mm, and still more specifically approximately 26.6mm. Of course, thicknesses and longitudinal lengths of the base portion 141 of the monolithic cleaning unit 140 may be outside of the noted ranges in some embodiments.

In the embodiments exemplified in Figures 4A and 4B, the front surface 143 of the base portion 141 of the monolithic cleaning unit 140 is exposed at the front surface 121 of the head 120. Stated another way, the front surface 143 of the base portion 141 of the monolithic cleaning unit 140 forms at least a portion of the front surface 121 of the head 120. In certain embodiments the front surface 143 of the base portion 141 of the monolithic cleaning unit 140 may form greater than 80%, or greater than 85%, or greater than 90%, or greater than 95% of the surface area of the front surface 121 of the head 120. In some embodiments the front surface 131 of the support structure 130 forms a perimeter portion of the front surface 121 of the head 120 and the front surface 143 of the base portion 141 of the monolithic cleaning unit 140 forms an interior portion of the front surface 121 of the head 120 that is substantially, or entirely, surrounded by the front surface 131 of the support structure 130. In other embodiments, the front surface 143 of the base portion 141 of the monolithic cleaning unit 140 may form the entire front surface 121 of the head 120.

In some embodiments, the monolithic cleaning unit 140 may also extend over the distal end of the support structure 130. In such an embodiment, the passageways 135 may be included or omitted as desired. Specifically, the passageways 135 are used in the exemplified embodiment in order to securely couple the monolithic cleaning unit 140 to the support structure 130. However, if the monolithic cleaning unit 140 extends over the front and rear surfaces 131, 136 of the support structure 130 and also over the distal end of the support structure 130, such passageways may not be needed to achieve the coupling of the monolithic cleaning unit 140 to the support structure 130. Other techniques for ensuring a secure coupling between the monolithic cleaning unit 140 and the support structure 130 are within the scope of the present invention, such as using various combinations of interlocking features on the monolithic cleaning unit 140 and the support structure 130.

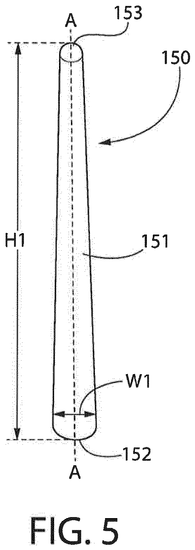

In the embodiment exemplified in Figures 1-4B, the bristles 150 of the monolithic cleaning unit 140 are all in the shape of a tapered cylinder having smooth outer surfaces. One exemplary embodiment of the bristles 150 is illustrated in Figure 5. Specifically, the bristles 150 may have a tapered cylinder shape (also known as a truncated cone or a frusto-cone). Thus, in the embodiment exemplified in Figures 1-5, the bristles 150 comprise a body 151 that extends along a longitudinal axis A-A from a proximal end 152 that is adjacent to or in contact with or that extends directly from the base portion 141 of the monolithic cleaning unit 140 to a distal end 153 that is spaced from the front surface 121 of the head 120. In this embodiment, the body 151 is cylindrical (round, oval, tapered), conical, or the like. The distal end 153 of the bristle 150 may be flat, rounded, tapered, slanted, or the like as desired to achieve different cleaning benefits.

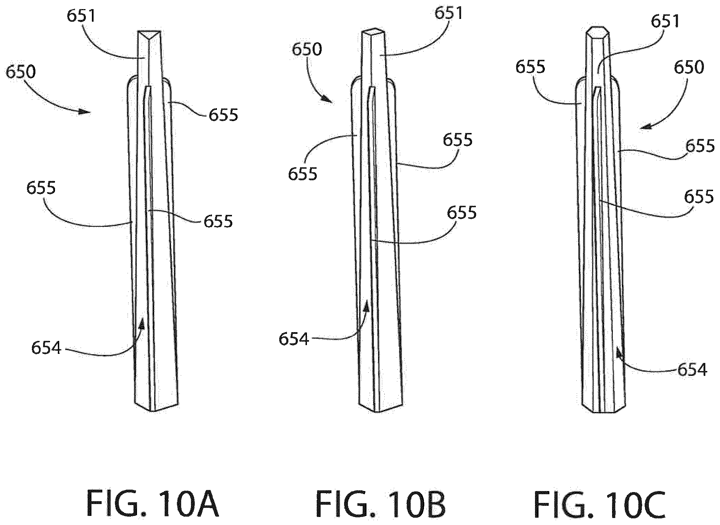

Although the bristles 150 are illustrated herein as comprising a body 151 having a cylindrical or conical shape (with a round or oval transverse cross-sectional shape), the invention is not to be so limited in all embodiments. When the body 151 has a cylindrical shape, this may include oval cylinders, tapered cylinders, cones, truncated cones, frusto-conical shaped structures, or the like. Furthermore, in some embodiments the body 151 of the bristles 150 may have a shape that is not cylindrical or round, such as having triangular, square, rectangular, or other polygonal shaped transverse cross-sections. Thus, the body 151 of the bristles 150 may be cylindrical, conical, or prism-shaped and the body 151 may be tapered. Examples of some non-cylindrical shaped bristles (i.e., prism-shaped) are illustrated in FIGS. 10A-10C and described below. Various combinations of the different bristles described in FIGS. 5-11E may be included on the head 120 of the oral care implement 100. Specifically, various combinations of the different bristles described in FIGS. 5-11E may form the bristles 150 of the monolithic cleaning unit 140. In some embodiments all of the bristles on the head 120 of the oral care implement 100 are identical in structure. In other embodiments, different ones of the bristles described herein may form part of the monolithic cleaning unit 140 and be provided on the same head 120.

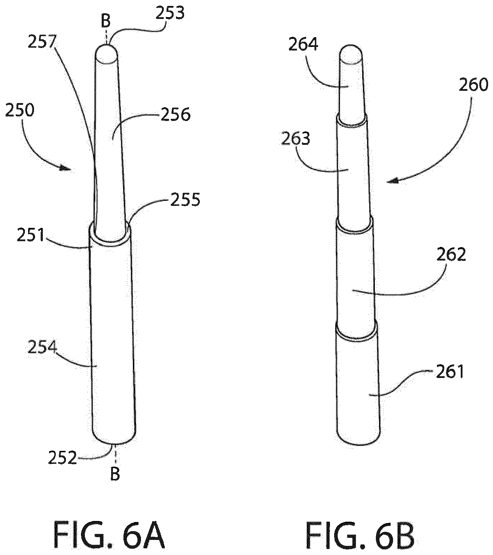

Referring to FIGS. 4A and 5, in certain embodiments the bristles 150 may have a maximum width W1 of between 0.6 mm and 1.0 mm, and more specifically approximately 0.8 mm. Furthermore, the bristles 150 may have a height H1 of between 10 mm and 14 mm, and more specifically between 11 mm and 12 mm. In certain embodiments, a ratio of the height H1 of the bristles 150 to the width W1 of the bristles 150 may be between 8:1 and 20:1, or more specifically between 10:1 and 15:1, and still more specifically between 12:1 and 15:1 or between 13:1 and 15:1. This height to width ratio for the bristles 150 may be applicable to all examples useful for understanding the invention and to all embodiments of the bristles described herein, including those illustrated in FIGS. 6A-11E. All of the bristles 150 of the monolithic cleaning unit 140 may have the same height as illustrated in FIGS. 4A and 4B or they may have varying heights. As noted above, in the embodiment exemplified in FIG. 5, the bristles 150 have a tapered cylindrical shape. Thus, the maximum width W1 of the bristles 150 is the width of the bristles 150 at the proximal end 152. The width and the cross-sectional area of the bristles 150 decreases with distance from the proximal end 152 towards the distal end 153.

In Figures 1-4B, the bristles 150 are illustrated having a cylindrical or conical shape similar to the bristle 150 of Figure 5. However, the invention is not to be so limited in all embodiments and the bristles that form a part of the monolithic cleaning unit 140 may include the bristles 150 alone, the bristles 150 along with other bristles, or may just include other types of bristles as described herein below with reference to Figures 6-11E. Thus, any combination of the different types of bristles described herein can form an integral part of the monolithic cleaning unit 140 of the head 120 of the oral care implement 100.

Referring to FIGS. 6A and 6B, a bristle 250 is illustrated in accordance with an example useful for understanding the invention. In some examples, one, or a plurality, of the bristles 250 may be formed as an integral part of the monolithic cleaning unit 140. Specifically, the monolithic cleaning unit 140 may include the base portion 141 and one or a plurality of the bristles 250. Alternatively, the monolithic cleaning unit 140 may include the base portion 141 and a combination of the bristles 150, 250, and the other bristles described herein below.

Referring first to FIG. 6A, the bristle 250 comprises a body 251 that extends from a proximal end 252 to a distal end 253 along a longitudinal axis B-B. In this example useful for understanding the invention, the body 251 comprises a first longitudinal section 254 that extends from the proximal end 252 of the body 251 to a distal end 255 of the first longitudinal section 254 and a second longitudinal section 256 that extends from a proximal end 257 of the second longitudinal section 256 to the distal end 253 of the body 251. The first and second longitudinal sections 254, 256 form a stepped surface because the second longitudinal section 256 has an immediately reduced cross-sectional area relative to the first longitudinal section 254 at the intersection of the first and second longitudinal sections 254, 256. Specifically, the first longitudinal section 254 has a minimum cross-sectional area that is greater than a maximum cross-sectional area of the second longitudinal section 256. More specifically, the first longitudinal section 254 has a cross-sectional area at the distal end 255 of the first longitudinal section 254 that is greater than the cross-sectional area of the second longitudinal section 256 taken at the proximal end 257 of the second longitudinal section 256. The distal end 255 of the first longitudinal section 254 forms an annular shoulder or flange that protrudes radially from the proximal end 257 of the second longitudinal section 256. This annular shoulder or flange forms an additional surface or edge for contacting and cleaning a user's oral surfaces.

In certain examples, the first longitudinal section 254 may have a constant cross-sectional area along its length from the proximal end 252 of the body 251 to the distal end 255 of the first longitudinal section 254. In other examples, the cross-sectional area of the first longitudinal section 254 may decrease from the proximal end 252 of the body 251 to the distal end 255 of the first longitudinal section 254. In the exemplified arrangement useful for understanding the invention, the cross-sectional area of the second longitudinal section 256 decreases from the proximal end 257 of the second longitudinal section 256 to the distal end 253 of the body 251 such that the second longitudinal section 256 tapers along its entire length. The thicker first longitudinal section 254 provides rigidity to the bristle 250 whereas the thinner second longitudinal section 256 can flex and move more readily during toothbrushing.

Referring to FIG. 6B, an alternate example of a bristle 260 is illustrated. In this example useful for understanding the invention, the bristle 260 has a first longitudinal section 261, a second longitudinal section 262, a third longitudinal section 263, and a fourth longitudinal section 264. Each longitudinal section 261-264 may have a constant cross-sectional area or a gradually decreasing cross-sectional area (moving from the proximal end to the distal end of the respective sections). The transition between the adjacent longitudinal sections 261-264 is formed by an abrupt change in the cross-sectional area of the bristle 260, such as was described above with regard to FIG. 6A, so that an annular flange or shoulder is formed between each of the adjacent longitudinal sections 261-264. The bristle 260 will have different resiliencies/flexibilities along its length as the cross-sectional area within each longitudinal section 261-264 decreases.

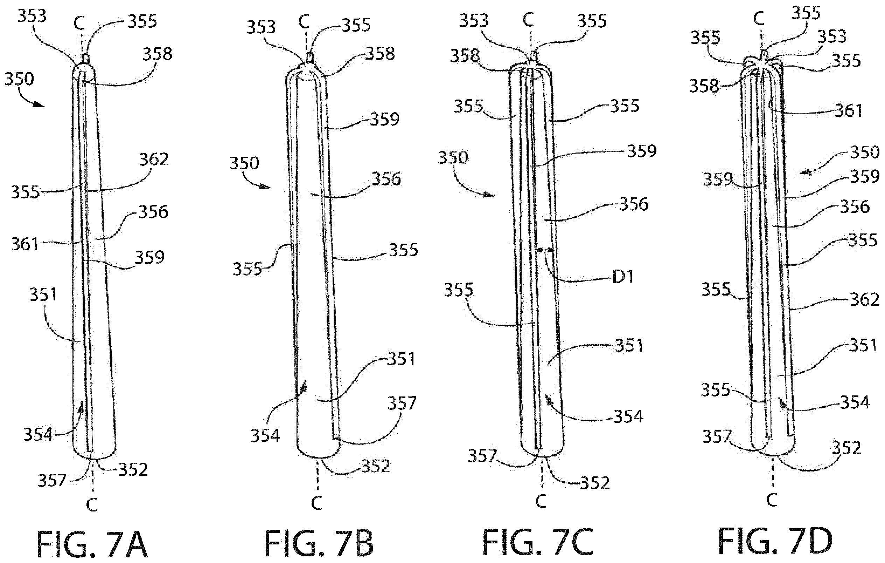

Referring to FIGS. 7A-7D concurrently, several permutations of a bristle 350 are illustrated and will be described. The bristle 350 is similar to the bristle 150 described above except as described in detail below. Thus, the bristle 350, or a plurality of the bristles 350, may be formed as an integral part of the monolithic cleaning unit 140. The monolithic cleaning unit 140 may include only the bristles 350 or a combination of the bristles 350 along with the bristles 150, 250 described above and other bristles to be described later on in this document. Certain features of the bristles 350 are the same as described above with regard to the bristles 150 of FIGS. 1-5 and thus a similar numbering scheme will be used except the 300-series of numbers will be used to describe the bristles 350. It should be appreciated that the description of certain features of the bristles 150 may be applicable to the bristles 350 even though such features are not described in great detail below with regard to the bristles 350.

The bristle 350 comprises a body 351 that extends along a longitudinal axis C-C from a proximal end 352 to a distal end 353. The proximal end 352 of the bristle 350 is adjacent to and connected directly to the base portion 141 of the monolithic cleaning unit 140 as described above with regard to the bristles 150. The body 351 of the bristle 350 comprises an outer surface 354. In this embodiment, the body 351 of the bristle 350 is in the shape of a tapered cylinder, although other shapes are possible as discussed in detail above. Thus, the body 351 has a circular or oval (i.e., round) transverse cross-sectional shape and the cross-sectional area of the body 351 decreases with distance from the proximal end 352 towards the distal end 353.

The bristle 350 also comprises one, or a plurality, of longitudinally elongated ribs 355 extending from the outer surface of the body 351. In the embodiment of Figure 7A, the bristle 350 comprises two of the longitudinally elongated ribs 355. In the embodiment of Figure 7B, the bristle 350 comprises three of the longitudinally elongated ribs 355. In the embodiment of Figure 7C, the bristle 350 comprises four of the longitudinally elongated ribs 355. In the embodiment of Figure 7D, the bristle 350 comprises five of the longitudinally elongated ribs 355. Although multiple longitudinally elongated ribs 355 are illustrated in each embodiment exemplified herein, a single longitudinal rib 355 may also be used.

In each of the embodiments depicted in Figures 7A-7D, the bristle 350 comprises a plurality of the longitudinally elongated ribs 355 extending from the outer surface 354 of the body 351 of the bristle 350. In certain embodiments, the longitudinally elongated ribs 355 may extend radially outward from the outer surface 354 of the body 351 of the bristle 350. The longitudinally elongated ribs 355 extend vertically along a portion of or the entirety of the length of the bristle 350 between the proximal and distal ends 352, 353 of the bristle 350 in a longitudinal direction (i.e., in a direction of the longitudinal axis C-C). The longitudinally elongated ribs 355 extend from the outer surface 354 of the body 351 in a circumferentially spaced apart manner. Thus, circumferential portions 356 (only some of which are labeled in the drawings to avoid clutter) of the outer surface 354 of the body 351 located between adjacent ones of the longitudinally elongated ribs 355 are exposed along an entire length of the body 351. In the exemplified embodiment, the circumferential distance between two adjacent ones of the longitudinally elongated ribs 355 decreases from the proximal end 352 of the body 351 to the distal end 353 of the body 351 due to the tapering shape of the body 351.

In this embodiment, each of the longitudinally elongated ribs 355 extends from a bottom end 357 located near the proximal end 352 of the body 351 to a top end 358 located at the distal end 353 of the body 351. More specifically, the bottom ends 357 of the longitudinally elongated ribs 355 are spaced a distance from the proximal end 352 of the body 351. The top ends 358 of the longitudinally elongated ribs 355 are positioned at the distal end 353 of the body 351 and are not spaced therefrom. The body 351 has a length measured from the proximal end 352 to the distal end 353 and the longitudinally elongated ribs 355 extend along a majority of the length of the body 351. In certain embodiments a ratio of the length of the body 351 to a length of the longitudinally elongated ribs 355 is between 1.1:1 and 1.5:1.

In the exemplified embodiment, each of the longitudinally elongated ribs 355 is a somewhat thin member extending from the outer surface 354 of the body 351 of the bristle 350. Specifically, the longitudinally elongated ribs 355 comprise first and second sidewalls 361, 362 that extend directly from the outer surface 354 of the body 351 of the bristle 350 and a terminal edge 359. The first and second sidewalls 361, 362 terminate at the terminal edge 359, which extends between the first and second sidewalls 361, 362. The terminal edge 359 is spaced a distance from the outer surface 354 of the body 351 to form a height of the longitudinally elongated rib 355. In certain embodiments, a greater surface area of the outer surface 354 of the body 351 of the bristle 350 is smooth and free of the longitudinally elongated ribs 355 than the surface area of the outer surface 354 of the body 351 taken up by the longitudinally elongated ribs 355.

In this embodiment, the body 351 of the bristle 350 tapers from the proximal end 352 to the distal end 353. Stated another way, the transverse cross-sectional area of the body 351 gradually (and in certain embodiments continuously) decreases as the body 351 extends from the proximal end 352 to the distal end 353. Furthermore, as the body 351 tapers towards the distal end 353, the longitudinally elongated ribs 355 extend further from the outer surface 354 of the body 351 the closer they get to the distal end 353 of the body 351. Specifically, the longitudinally elongated ribs 355 comprise the terminal edge 359, which is the edge of the longitudinally elongated ribs 355 located furthest from the outer surface 354 of the body 351. A height of the longitudinally elongated ribs 355 measured from the outer surface 354 of the body 351 to the terminal edge 359 of the longitudinally elongated ribs 355 increases along a length of the longitudinally elongated ribs 355 from the bottom end 357 of the longitudinally elongated ribs 355 to the top end 358 of the longitudinally elongated ribs 355. Thus, the longitudinally elongated ribs 355 extend a greater height from the outer surface 354 of the body 351 towards the top end 358 of the longitudinally elongated ribs 355 than the bottom end 357 of the longitudinally elongated ribs 355.

Although the height of the longitudinally elongated ribs 355 relative to the outer surface 354 of the body 351 increases towards the top end 358 of the longitudinally elongated ribs 355, this is due primarily (or entirely) to the tapering of the body 351. Thus, a distance D1 measured from the longitudinal axis C-C of the body 351 to the terminal edge 359 of the longitudinally elongated ribs 355 is substantially constant along the entire length of the longitudinally elongated ribs 355. As a result, the terminal edge 359 of the longitudinally elongated ribs 355 extend along an axis or plane that is parallel to the longitudinal axis C-C of the body 351.

In the exemplified embodiment, the height that the longitudinally elongated ribs 355 extend from the outer surface 354 of the body 351 is greater than the width of the terminal edge 359 of the longitudinally elongated ribs 355 measured between the opposing first and second sidewalls 361, 362. In other embodiments, the width of the terminal edge 359 and a maximum height that the longitudinally elongated ribs 355 extends from the outer surface 354 of the body 351 is nearly the same. In certain embodiments the maximum height of the longitudinally elongated ribs 355 and the width of the terminal edges 359 of the longitudinally elongated ribs 355 may be less than 0.5 mm. In certain embodiments the maximum height of the longitudinally elongated ribs 355 is between 0.4 mm and 0.5 mm, and more specifically approximately 0.45 mm, and the width of the terminal edge 359 may be less than 0.4 mm, less than 0.3 mm, or less than 0.2 mm. While the height of the longitudinally elongated ribs 355 may change along the length of the body 351, the width of the longitudinally elongated ribs 355 may be constant along the length of the longitudinally elongated ribs 355. In some embodiments, a ratio of the maximum width of the body 351 of the bristle 350 to the maximum height of the longitudinally elongated ribs 355 may be between 1.1:1 to 4:1, more specifically between 1.4:1 and 3:1, and still more specifically between 1.6:1 and 1.9:1.

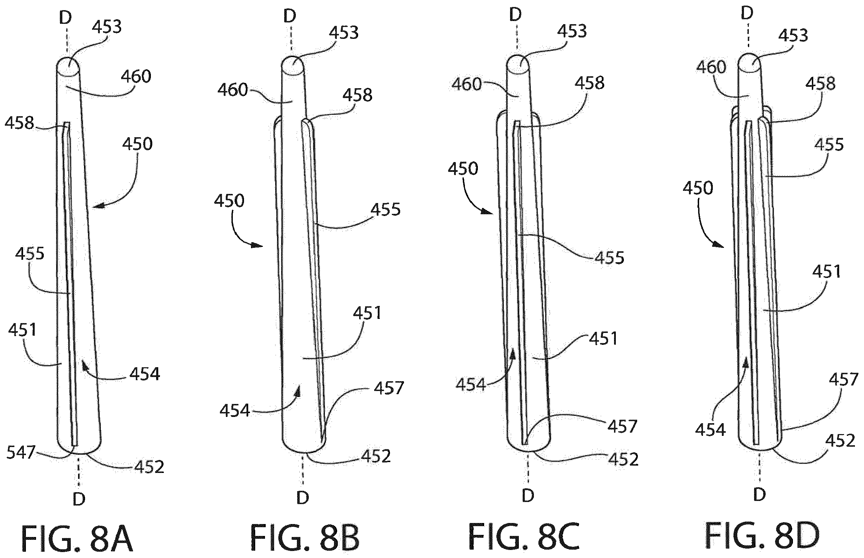

Referring to FIGS. 8A-8D, another bristle 450 will be described in accordance with another example useful to understand the present invention. The bristle 450 is similar to the bristle 350 described above and thus similar numbering will be used. Only the features of the bristle 450 that are different than the features of the bristle 350 described above will be described in detail herein below. Thus, it should be appreciated that the description of the bristle 350 is applicable to the bristle 450 except as described below. The bristle 450 will be described using a similar numbering scheme to the bristle 350 except that the 400-series of numbers will be used. The bristle 450, or a plurality of the bristles 450, may form an integral part of the monolithic cleaning unit 140 as has been discussed above.

The bristle 450 comprises a body 451 that extends from a proximal end 452 to a distal end 453 along a longitudinal axis D-D. The body 451 has an outer surface 454. The body 451 tapers along its length as it extends from the proximal end 452 towards the distal end 453. Furthermore, one, or a plurality of, longitudinally elongated ribs 455 extend or protrude from the outer surface 454 of the body 451. As illustrated in Figures 8A-8D, the bristle 450 may include one, two, three, four, five, or more of the longitudinally elongated ribs 455 extending therefrom in a circumferentially spaced apart manner. The longitudinally elongated ribs 455 extend from a bottom end 457 that is adjacent to and spaced from the proximal end 452 of the body 451 to a top end 458 that is adjacent to and spaced from the distal end 453 of the body 451. Thus, the main difference between the bristle 450 and the bristles 350 described above is that the top end 458 of the longitudinally elongated ribs 455 are spaced below rather than positioned at the distal end 453 of the body 451.

Thus, in this example the body 451 of the bristle 450 comprises a tip portion 460 that is free of the longitudinally elongated ribs 455. Stated another way, the longitudinally elongated ribs 455 terminate at a distance below the distal end 453 of the bristle 450. The space between the top ends 458 of the longitudinally elongated ribs 455 and the distal end 453 of the bristle 450 is free of the ribs or other features extending therefrom. Thus, the tip portion 460 of the bristle 450 may be smooth along its entire circumference. This permits the tip portion 460 of the bristle 450 to be capable of penetrating into the interproximal tooth spaces during cleaning without interference by the longitudinally elongated ribs 455.

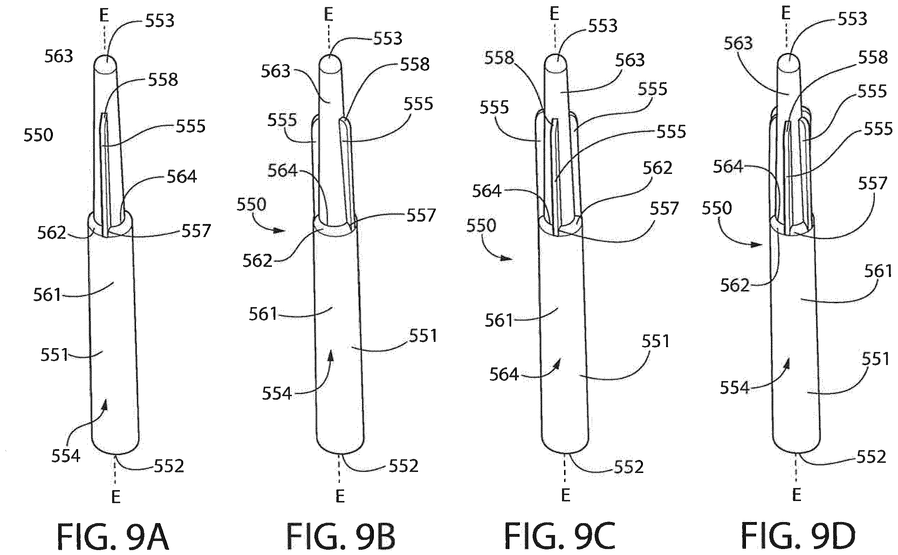

Referring to Figures 9A-9D, another example of a bristle 550 that may form an integral part of the monolithic cleaning unit 140 will be described. The bristle 550 is similar to the bristle 250 described above with regard to Figure 6A and the bristle 350 described above with regard to Figures 7A-7D and thus similar numbering will be used. Only the features of the bristle 550 that are different than the features of the bristle 250, 350 described above will be described in detail herein below. Thus, it should be appreciated that the description of the bristles 250, 350 is applicable to the bristle 550 except as described below. The bristle 550, or a plurality of the bristles 550, may form an integral part of the monolithic cleaning unit 140 as has been discussed above.

The bristle 550 comprises a body 551 that extends from a proximal end 552 to a distal end 553 along a longitudinal axis E-E. The body 551 comprises an outer surface 554. One or more longitudinally elongated ribs 555 extend or protrude from the outer surface 554 in much the same way as described above. However, in this example the body 551 comprises a first longitudinal section 561 that extends from the proximal end 552 of the body 551 to a distal end 562 of the first longitudinal section 561 and a second longitudinal section 563 that extends from a proximal end 564 to the distal end 553 of the body 551. Similar to the discussion of Figure 6A, the first longitudinal section 561 has a minimum cross-sectional area that is greater than a maximum cross-sectional area of the second longitudinal section 563. More specifically, the distal end 562 of the first longitudinal section 561 has a greater cross-sectional area than the proximal end 564 of the second longitudinal section 563, thereby forming an annular flange at the distal end 562 of the first longitudinal section 561. The bristle 550 may include additional longitudinal sections such as illustrated in Figure 6B. As with the previously described embodiments and examples and as shown in Figures 9A-9D, there may be one, two, three, four, five, or more of the longitudinally elongated ribs 555 extending from the body 551.

In this example, the longitudinally elongated ribs 555 are located entirely on the second longitudinal section 563 and the first longitudinal section 561 is completely devoid of any of the ribs. Thus, in this example the first longitudinal section 561 comprises a smooth outer surface 554 that is free of protuberances extending therefrom or indents formed therein. Specifically, the longitudinally elongated ribs 555 extend from a bottom end 557 to a top end 558. In the example, the bottom ends 557 of the longitudinally elongated ribs 555 are in contact with the distal end 562 of the first longitudinal section 561. Thus, the longitudinally elongated ribs 555 extend upwardly from the annular shoulder or flange formed by the distal end 562 of the first longitudinal section 561 and outwardly from the outer surface 554 of the body 551 along the second longitudinal section 563 of the body 561. The longitudinally elongated ribs 555 extend along the second longitudinal section 563 from the proximal end 564 of the second longitudinal section 563 to the top end 558 of the longitudinally elongated ribs 555, which in the example is positioned below the distal end 553 of the bristle 550.

Of course, in other examples the longitudinally elongated ribs 555 may extend to the distal end 553 of the body 551. Alternatively, the longitudinally elongated ribs 555 may be positioned entirely on the first longitudinal section 561 such that the second longitudinal section n563 is devoid of the longitudinally elongated ribs 555. This may permit the first longitudinal section 561 with the longitudinally elongated ribs 555 thereon to perform a wiping cleaning action while the second longitudinal section 563 performs a more region-specific and interproximal cleaning. In the example, a terminal edge 559 of the longitudinally elongated ribs 555 extends the same distance from the longitudinal axis E-E as the outer surface 554 of the body 551 in the first longitudinal section 561. Thus, the longitudinally elongated ribs 555 do not extend radially beyond the outer surface 554 of the body 551 in the first longitudinal section 561.

Referring to Figures 10A-10C, another a bristle 650 that may form an integral part of the monolithic cleaning unit 140 will be described in accordance with an example useful to understand the present invention. The bristle 650 or a plurality of the bristles 650 may be used on the head 120 as a part of the monolithic cleaning unit 140 as has been described above. The bristle 650 is similar to the bristles 450 described above with reference to Figures 8A-8D except with regard to the shape of the body 651. Specifically, in Figures 8A-8D the body 451 is cylindrical, tapered cylindrical, conical, frusto-conical, or the like. In Figures 10A-10C, the body 651 of the bristle 650 has different non-circular shapes (i.e., prism shapes).

Specifically, in Figure 10A the body 651 of the bristle 650 has a triangular cross-sectional shape. In Figure 10B the body 651 of the bristle 650 has a square or rectangular cross-sectional shape. In Figure 10C, the body 651 of the bristle 650 has a hexagonal cross-sectional shape. Thus, Figures 10A-10C provide exemplary example of the bristle 650 having shapes that are non-cylindrical. In each of these examples, a plurality of longitudinally elongated ribs 655 extend from the outer surface 654 of the body 651. The longitudinally elongated ribs 655 may protrude from edges formed on the outer surface 654 (see Figures 10A and 10B) or from the surfaces formed between the edges on the outer surface 654 (see Figure 10C). Although only triangles, squares, and hexagons are depicted as possibilities for the cross-sectional shapes of the body 651 of the bristle 650, other polygonal shapes are possible. Using a polygonal shape for the body 651 of the bristle 650 and having the longitudinally elongated ribs 655 protruding therefrom provides additional edges for teeth and soft tissue surface cleaning.

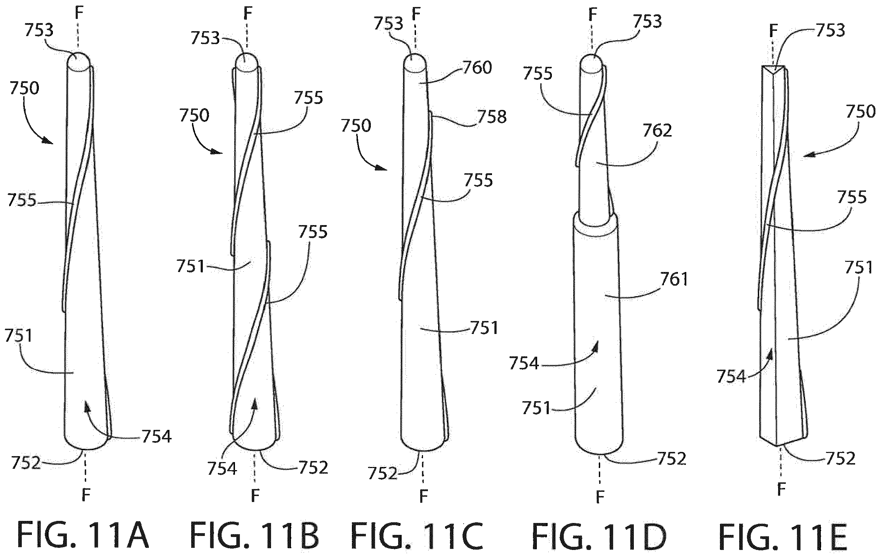

Referring to Figures 11A-11E, versions of the bristles described herein above having a spiral or helical rib rather than a longitudinally elongated rib will be described.

Referring first to Figure 11A, a bristle 750 that may form an integral part of the monolithic cleaning unit 140 will be described in accordance with an example useful to understand the present invention. The bristle 750 is identical to the bristle 350 of Figure 7A except that instead of the rib being longitudinally elongated, it is spiral or helical. A numbering scheme similar to that used to describe the bristle 350 will be used to describe the bristle 750 except that the 700-series of numbers will be used. It should be appreciated that certain features of the bristle 350 that were described above and that are not described in detail with regard to the bristle 750 for brevity are nonetheless applicable to the bristle 750.

Specifically, the bristle 750 comprises a body 751 that extends from a proximal end 752 to a distal end 753 along a longitudinal axis F-F. The proximal end 752 of the body 751 is the portion that is coupled to the base portion 141 of the monolithic cleaning unit 140 and the distal end 753 of the body 751 is the portion that is spaced from the head 120 of the oral care implement 100. The body 751 of the bristle 750 comprises an outer surface 754. Furthermore, as discussed above with regard to the bristle 350, the body 751 of the bristle 750 tapers along its length from the proximal end 752 to the distal end 753 such that the transverse cross-sectional area of the body 751 decreases with distance from the proximal end 752 towards the distal end 753.

Furthermore, the bristle 750 comprises a rib 755 extending from the outer surface 754 of the body 751. However, as noted above, the rib 755 is a spiral rib rather than a longitudinally elongated rib. Thus, the rib 755 extends from the outer surface 754 of the body 751 in a helical manner about the longitudinal axis F-F. Stated another way, the rib 755 is wound around the body 751 as it extends from the proximal end 752 of the body 751 to the distal end 753 of the body 751.

Figure 11B illustrates a modified version of the bristle 750 of Figure 11A that includes two of the ribs 755 extending from the outer surface 754 of the body 751 of the bristle 750 in a helical manner about the longitudinal axis F-F. In this example, the two ribs 755 are spaced apart from one another along the entire length of the ribs 755. Other examples are possible that use more than two of the helical or spiral ribs 755 as should be appreciated by persons skilled in the art.

Figure 11C illustrates another modified version of the bristle 750 of Figure 11A that is similar to the bristle 450 of Figure 8A in that the rib 755, which extends in a helical manner about the longitudinal axis F-F, does not extend all the way to the distal end 753 of the body 751. Rather, the top end 758 of the rib 755 is spaced from the distal end 753 of the body 751 so that a tip portion 760 of the bristle 750 is formed that is free of the rib(s) 755.

Figure 11D illustrates yet another modified version of the bristle 750 of Figure 11A that is similar to the bristle 550 of Figure 9A in that the body 751 of the bristle 750 comprises first and second longitudinal sections 761, 762 that are distinguishable based on their transverse cross-sectional areas. The rib 755, which extends in a helical manner about the longitudinal axis F-F, is positioned only on the second longitudinal section 762.

Finally, Figure 11E illustrates a further modified version of the bristle 750 of Figure 11A that is similar to the bristle 650 of Figure 10A in that the body 751 of the bristle 750 has a triangular cross-sectional shape rather than being circular or oval. Thus, the body 751 of the bristle 750 in this example is in the shape of an elongated prism rather than a cylinder or cone. In this example, the rib 755 extends from the outer surface 754 of the body 751 of the bristle 750 in a helical manner about the longitudinal axis F-F.

In certain embodiments, some of the bristles may comprise a body comprising a thicker base portion having multiple finger-like protrusions extending from a top surface of the base portion to create multiple touch points during cleaning. Such finger-like protrusions may be circumferentially spaced apart to enable the finger-like protrusions to have increased flexibility during use. In such embodiment, ribs such as those described herein may extend from the body of the bristle. Specifically, such ribs may extend along the entire length of the body including along the thicker base portion and along the finger-like protrusions. Alternatively, the ribs may extend only along the thicker base portion such that the finger-like protrusions are free of the ribs. In another embodiment, the ribs may extend from the body only along the finger-like protrusions such that the base portion is free of the ribs.

Furthermore, in some embodiments combinations of bristles having different cross-sectional areas may be included on the same oral care implement head. Thus, a monolithic cleaning unit may include bristles with larger and smaller cross-sectional areas. Ribs such as those described herein may extend from the bodies of only the smaller cross-sectional area bristles, only the larger cross-sectional area bristles, or from all of the bristles.

Various combinations of the teachings set forth herein are possible and fall within the scope of the present invention. Specifically, different combinations of the different bristles 150, 250, 350, 450, 550, 650, 750 described herein may form a part of the monolithic cleaning unit 140. Specifically, in some embodiments only one of the types of bristles 150, 250, 350, 450, 550, 650, 750 described herein are used on the monolithic cleaning unit 140. In other embodiments, a mixture of the different types of cleaning elements 150, 250, 350, 450, 550, 650, 750 may be used on the same monolithic cleaning unit 140.

The addition of the ribs onto the bristles as described herein provides additional contact edges for cleaning a user's teeth and other oral surfaces. Thus, although there are less of the bristles on the head when using injection molded bristles than with traditional filament bristles, the bristles may have the same or more edges for contacting and cleaning the user's teeth and other oral surfaces. Furthermore, combining different types of the bristles described herein on the same head may provide a more effective cleaning than achieved with currently available oral care implements and toothbrushes.

While the invention has been described with respect to specific examples including presently preferred modes of carrying out the invention, those skilled in the art will appreciate that there are numerous variations and permutations of the above described systems and techniques. It is to be understood that other embodiments may be utilized and structural and functional modifications may be made without departing from the scope of the present invention. Thus, the scope of the invention should be construed broadly as set forth in the appended claims.

## Claims

1. An oral care implement (100) comprising:
a handle (110) and a head (120) having a front surface (121) and an opposing rear surface (122), the head (120) comprising a support structure (130) and a monolithic cleaning unit (140), the monolithic cleaning unit (140) comprising:
a base portion (141) coupled to the support structure (130) and forming a portion of the front surface (121) of the head (120); and
a plurality of bristles (150) extending from the base portion (141) and protruding from the front surface (121) of the head (120);
wherein at least one of the plurality of bristles (150) comprises:
a body (351) having an outer surface (354) that extends along a longitudinal axis (C-C) from a proximal end (352) that is adjacent the base portion (141) of the monolithic cleaning unit (140) to a distal end (353) that is spaced from the front surface (121) of the head (120);
**characterized in that** the oral care implement (100) further comprises a plurality of longitudinally elongated ribs (355) extending from the outer surface (354) of the body (351) in a circumferentially spaced apart manner, wherein a height of each of the plurality of longitudinally elongated ribs (355) measured from the outer surface (354) of the body (351) to a terminal edge (359) of the plurality of longitudinally elongated ribs (355) increases along a length of the longitudinally elongated ribs (355) from a bottom end (357) of the longitudinally elongated ribs (355) that is adjacent to the proximal end (352) of the body (351) to a top end (358) of the longitudinally elongated ribs (355) that is adjacent to the distal end (353) of the body (351).

2. The oral care implement according to claim 1 wherein portions of the outer surface (354) of the body (351) located between adjacent ones of the longitudinally elongated ribs (355) are exposed along an entire length of the body (351).

3. The oral care implement according to claim 1 wherein a tip portion (460) of the body (451) is free of the longitudinally elongated ribs (455).

4. The oral care implement according to any one of claims 1 to 3 wherein the body tapers (351) such that it has a transverse cross-sectional area that decreases from the proximal end (352) to the distal end (353).

5. The oral care implement according to claim 1 wherein a distance measured from the longitudinal axis (C-C) of the body (351) to the terminal edge (359) of each of the plurality longitudinally elongated ribs (355) is constant along the length of the longitudinally elongated ribs (355).

6. The oral care implement according to any one of claims 1 to 5 wherein the body (551) comprises a first longitudinal section (561) comprising the proximal end (552) and having a minimum cross-sectional area and a second longitudinal section (563) comprising the distal end (553) and having a maximum cross-sectional area that is less than the minimum cross-sectional area of the first longitudinal section (561).

7. The oral care implement according to claim 6 wherein the plurality of longitudinally elongated ribs (555) are located entirely on the second longitudinal section (563) of the body (551), the first longitudinal section (561) of the body (551) being devoid of the longitudinally elongated ribs (555).

8. The oral care implement according to claim 7 wherein the outer surface (554) of the body (551) in the first longitudinal section (561) and a terminal edge (559) of each of the plurality of longitudinally elongated ribs (555) extend the same distance from the longitudinal axis (E-E) such that the plurality of longitudinally elongated ribs (555) do not protrude beyond the outer surface (554) of the body (551) in the first longitudinal section (561), and wherein the plurality of longitudinally elongated ribs (555) extend from and are in contact with a distal end (562) of the first longitudinal section (561) of the body (551).

9. The oral care implement according to any one of claims 6 to 8 wherein the first longitudinal section (561) of the body (551) comprises a constant cross-sectional area and the second longitudinal section (563) of the body (551) tapers from the first longitudinal section (561) of the body (551) to the distal end (553) of the body (551).

10. The oral care implement according to any one of claims 6 to 9 wherein the first longitudinal section (561) of the body (551) extends from the proximal end (552) of the body (551) to a distal end (562) of the first longitudinal section (561) and wherein the second longitudinal section (563) extends from a proximal end (564) of the second longitudinal section (563) to the distal end (553) of the body (551), a cross-sectional area of the first longitudinal section (561) at the distal end (562) of the first longitudinal section (561) being greater than a cross-sectional area of the second longitudinal section (563) at the proximal end (564) of the second longitudinal section (563).

11. The oral care implement according to claim 10 wherein the longitudinally elongated ribs (555) extend from a bottom end (557) located at the proximal end (564) of the second longitudinal section (563) to a top end (558) that is spaced from the distal end (553) of the body (551).

12. The oral care implement according to any one of claims 1 to 11 wherein each of the plurality of bristles (150) comprises a body (351) having an outer surface (354) that extends along a longitudinal axis (C-C) and a plurality of longitudinally elongated ribs (355) extending from the outer surface (354) of the body (351) in a circumferentially spaced apart manner.

13. The oral care implement according to any one of claims 1 to 12 wherein the head (120) comprises tooth cleaning elements that consists only of the plurality of bristles (150) of the monolithic cleaning unit (140).

14. The oral care implement according to any one of claims 1 to 13 wherein the front surface (121) of the head (120) comprises a tufting area having a bristle density between 0.55 and 0.85 bristles per mm².

## Patentansprüche

1. Mundpflegegerät (100), das umfasst:
einen Griff (110) und einen Kopf (120) mit einer vorderen Fläche (121) und einer gegenüberliegenden hinteren Fläche (122), wobei der Kopf (120) eine Trägerstruktur (130) und eine monolithische Reinigungseinheit (140) umfasst, wobei die monolithische Reinigungseinheit (140) umfasst:
einen Basisabschnitt (141), der mit der Trägerstruktur (130) verbunden ist und einen Abschnitt der vorderen Fläche (121) des Kopfs (120) bildet; und
eine Mehrzahl von Borsten (150), die sich von dem Basisabschnitt (141) erstrecken und von der vorderen Fläche (121) des Kopfs (120) vorstehen;
wobei mindestens eine der Mehrzahl von Borsten (150) umfasst:
einen Körper (351) mit einer Außenfläche (354), die sich entlang einer Längsachse (C-C) von einem proximalen Ende (352), das zu dem Basisabschnitt (141) der monolithischen Reinigungseinheit (140) benachbart ist, zu einem distalen Ende (353) erstreckt, das von der vorderen Fläche (121) des Kopfs (120) beabstandet ist;
**dadurch gekennzeichnet, dass** das Mundpflegegerät (100) ferner eine Mehrzahl von in Längsrichtung langgestreckten Rippen (355) umfasst, die sich von der Außenfläche (354) des Körpers (351) in einer in Umfangsrichtung beabstandeten Weise erstrecken, wobei eine Höhe einer jeden der Mehrzahl von in Längsrichtung langgestreckten Rippen (355), gemessen von der Außenfläche (354) des Körpers (351) zu einer Endkante (359) der Mehrzahl von in Längsrichtung langgestreckten Rippen (355), entlang einer Länge der in Längsrichtung langgestreckten Rippen (355) von einem unteren Ende (357) der in Längsrichtung langgestreckten Rippen (355), das zu dem proximalen Ende (352) des Körpers (351) benachbart ist, zu einem oberen Ende (358) der in Längsrichtung langgestreckten Rippen (355), das zu dem distalen Ende (353) des Körpers (351) benachbart ist, zunimmt.

2. Mundpflegegerät nach Anspruch 1, wobei Abschnitte der Außenfläche (354) des Körpers (351), die sich zwischen benachbarten der in Längsrichtung langgestreckten Rippen (355) befinden, über die gesamte Länge des Körpers (351) freiliegen.

3. Mundpflegegerät nach Anspruch 1, wobei ein Spitzenabschnitt (460) des Körpers (451) frei von den in Längsrichtung langgestreckten Rippen (455) ist.

4. Mundpflegegerät nach einem der Ansprüche 1 bis 3, wobei sich der Körper (351) so verjüngt, dass er eine Querschnittsfläche hat, die von dem proximalen Ende (352) zu dem distalen Ende (353) abnimmt.

5. Mundpflegegerät nach Anspruch 1, wobei ein von der Längsachse (C-C) des Körpers (351) bis zu der Endkante (359) einer jeden der Mehrzahl von in Längsrichtung langgestreckten Rippen (355) gemessener Abstand über die Länge der in Längsrichtung langgestreckten Rippen (355) konstant ist.

6. Mundpflegegerät nach einem der Ansprüche 1 bis 5, wobei der Körper (551) einen ersten Längsabschnitt (561), der das proximale Ende (552) umfasst und eine minimale Querschnittsfläche aufweist, und einen zweiten Längsabschnitt (563) umfasst, der das distale Ende (553) umfasst und eine maximale Querschnittsfläche aufweist, die kleiner als die minimale Querschnittsfläche des ersten Längsabschnitts (561) ist.

7. Mundpflegegerät nach Anspruch 6, wobei die Mehrzahl von in Längsrichtung langgestreckten Rippen (555) vollständig an dem zweiten Längsabschnitt (563) des Körpers (551) angeordnet ist, wobei der erste Längsabschnitt (561) des Körpers (551) frei von den in Längsrichtung langgestreckten Rippen (555) ist.

8. Mundpflegegerät nach Anspruch 7, wobei sich die Außenfläche (554) des Körpers (551) in dem ersten Längsabschnitt (561) und eine Endkante (559) einer jeden der Mehrzahl von in Längsrichtung langgestreckten Rippen (555) in demselben Abstand von der Längsachse (E-E) erstrecken, so dass die Mehrzahl von in Längsrichtung langgestreckten Rippen (555) nicht über die Außenfläche (554) des Körpers (551) in dem ersten Längsabschnitt (561) hinausragt, und wobei sich die Mehrzahl der in Längsrichtung langgestreckten Rippen (555) von einem distalen Ende (562) des ersten Längsabschnitts (561) des Körpers (551) aus erstreckt und mit diesem in Kontakt ist.

9. Mundpflegegerät nach einem der Ansprüche 6 bis 8, wobei der erste Längsabschnitt (561) des Körpers (551) eine konstante Querschnittsfläche umfasst und sich der zweite Längsabschnitt (563) des Körpers (551) von dem ersten Längsabschnitt (561) des Körpers (551) zu dem distalen Ende (553) des Körpers (551) hin verjüngt.

10. Mundpflegegerät nach einem der Ansprüche 6 bis 9, wobei sich der erste Längsabschnitt (561) des Körpers (551) von dem proximalen Ende (552) des Körpers (551) zu einem distalen Ende (562) des ersten Längsabschnitts (561) erstreckt und wobei sich der zweite Längsabschnitt (563) von einem proximalen Ende (564) des zweiten Längsabschnitts (563) zu dem distalen Ende (553) des Körpers (551) erstreckt, wobei eine Querschnittsfläche des ersten Längsabschnitts (561) an dem distalen Ende (562) des ersten Längsabschnitts (561) größer ist als eine Querschnittsfläche des zweiten Längsabschnitts (563) an dem proximalen Ende (564) des zweiten Längsabschnitts (563).

11. Mundpflegegerät nach Anspruch 10, wobei sich die in Längsrichtung langgestreckten Rippen (555) von einem unteren Ende (557), das sich an dem proximalen Ende (564) des zweiten Längsabschnitts (563) befindet, zu einem oberen Ende (558) erstrecken, das von dem distalen Ende (553) des Körpers (551) beabstandet ist.

12. Mundpflegegerät nach einem der Ansprüche 1 bis 11, wobei jede der Mehrzahl von Borsten (150) einen Körper (351) mit einer Außenfläche (354), die sich entlang einer Längsachse (C-C) erstreckt, und eine Mehrzahl von in Längsrichtung langgestreckten Rippen (355) umfasst, die sich von der Außenfläche (354) des Körpers (351) in einer in Umfangsrichtung beabstandeten Weise erstrecken.

13. Mundpflegegerät nach einem der Ansprüche 1 bis 12, wobei der Kopf (120) Zahnreinigungselemente umfasst, die nur aus der Mehrzahl von Borsten (150) der monolithischen Reinigungseinheit (140) bestehen.

14. Mundpflegegerät nach einem der Ansprüche 1 bis 13, wobei die vordere Fläche (121) des Kopfs (120) einen Büschelbereich mit einer Borstendichte zwischen 0,55 und 0,85 Borsten pro mm² umfasst.

## Revendications

1. Instrument de soins buccaux (100) comprenant :
un manche (110) et une tête (120) ayant une surface avant (121) et une surface arrière opposée (122), la tête (120) comprenant une structure de support (130) et une unité de nettoyage monolithique (140), l'unité de nettoyage monolithique (140) comprenant:
une partie de base (141) accouplée à la structure de support (130) et formant une partie de la surface avant (121) de la tête (120) ; et
une pluralité de crins (150) s'étendant de la partie de base (141) et faisant saillie de la surface avant (121) de la tête (120) ;
dans lequel au moins l'un parmi la pluralité de crins (150) comprend:
un corps (351) ayant une surface externe (354) qui s'étend le long d'un axe longitudinal (C-C) à partir d'une extrémité proximale (352) qui est adjacente à la partie de base (141) de l'unité de nettoyage monolithique (140) à une extrémité distale (353) qui est espacée de la surface avant (121) de la tête (120) ; et
**caractérisé en ce que** l'instrument de soins buccaux (100) comprend en outre une pluralité de nervures allongées longitudinalement (355) s'étendant de la surface externe (354) du corps (351) d'une façon espacée de manière circonférentielle, dans lequel une hauteur de chacune parmi la pluralité des nervures allongées longitudinalement (355) mesurée à partir de la surface externe (354) du corps (351) à un bord terminal (359) de la pluralité des nervures allongées longitudinalement (355) augmente sur une longueur des nervures allongées longitudinalement (355) à partir d'une extrémité inférieure (357) des nervures allongées longitudinalement (355) qui est adjacent à l'extrémité proximale (352) du corps (351) à une extrémité supérieure (358) des nervures allongées longitudinalement (355) qui est adjacent à l'extrémité distale (353) du corps (351).

2. Instrument de soins buccaux selon la revendication 1, dans lequel des parties de la surface externe (454) du corps (451) situées entre des nervures adjacentes parmi les nervures allongées longitudinalement (455) sont apparentes sur toute la longueur du corps (451).

3. Instrument de soins buccaux selon la revendication 1, dans lequel une partie de pointe (460) du corps (451) est exempte de nervures allongées longitudinalement (455).

4. Instrument de soins buccaux selon l'une quelconque des revendications 1 à 3, dans lequel le corps (351) s'effile de telle sorte qu'il a une section transversale qui diminue de l'extrémité proximale (352) à l'extrémité distale (353).

5. Instrument de soins buccaux selon la revendication 1, dans lequel une distance mesurée de l'axe longitudinal (C-C) du corps (351) au bord terminal (359) de chacune parmi la pluralité de nervures allongées longitudinalement (355) est constante sur la longueur des nervures allongées longitudinalement (355).

6. Instrument de soins buccaux selon l'une quelconque des revendications 1 à 5, dans lequel le corps (551) comprend une première section longitudinale (561) comprenant l'extrémité proximale (552) et ayant une section transversale minimale et une seconde section longitudinale (563) comprenant l'extrémité distale (553) et ayant une zone transversale maximale qui est inférieure à la zone transversale minimale de la première section longitudinale (561).

7. Instrument de soins buccaux selon la revendication 6, dans lequel les nervures allongées longitudinalement (355) sont situées entièrement sur la seconde section longitudinale (563) du corps (551), la première section longitudinale (561) du corps (551) étant dépourvue de nervures allongées longitudinalement (355).

8. Instrument de soins buccaux selon la revendication 7, dans lequel la surface extérieure (554) du corps (551) dans la première section longitudinale (561) et un bord terminal (559) de chacune de la pluralité des nervures allongées longitudinalement (355) s'étend sur la même distance à partir de l'axe longitudinal (E-E) de sorte que la pluralité de nervures allongées longitudinalement (555) ne fassent pas saillie au-delà de la surface extérieure (554) du corps (551) dans la première section longitudinale (561), et dans lequel la pluralité de nervures allongées longitudinalement (555) s'étend depuis et sont en contact avec une extrémité distale (562) de la première section longitudinale (561) du corps (551).

9. Instrument de soins buccaux selon l'une quelconque des revendications 6 à 8, dans lequel la première section longitudinale (561) du corps (551) comprend une zone transversale constante et la seconde section longitudinale (563) du corps (551) s'effile à partir de la première section longitudinale (561) du corps (551) à l'extrémité distale (553) du corps (451).

10. Instrument de soins buccaux selon l'une quelconque des revendications 6 à 9, dans lequel la première partie longitudinale (561) du corps (551) s'étend de l'extrémité proximale (552) du corps (551) à une extrémité distale (562) de la première section longitudinale (561) et dans lequel la seconde section longitudinale (563) s'étend d'une extrémité proximale (564) de la seconde section longitudinale (563) à l'extrémité distale (553) du corps (551), une zone transversale de la première section longitudinale (561)à l'extrémité distale (562) de la première section longitudinale (561) étant supérieure à une zone transversale de la seconde section longitudinale (563) à l'extrémité proximale (564) de la seconde section longitudinale (563).

11. Instrument de soins buccaux selon la revendication 10, dans lequel les nervures allongées longitudinalement (555) s'étendent depuis une extrémité inférieure (557) située à l'extrémité proximale (564) de la seconde section longitudinale (563) à une extrémité supérieure (558) qui est espacée de l'extrémité distale (553) du corps (551).

12. Instrument de soins buccaux selon l'une quelconque des revendications 1 à 11, dans lequel chacun de la pluralité des crins (150) comprend un corps (351) ayant une surface externe (354) qui s'étend le long d'un axe longitudinal (C-C) et une pluralité de rainures allongées longitudinalement (355) s'étendant de la surface extérieure (354) du corps (351) d'une manière espacée circonférentiellement.

13. Instrument de soins buccaux selon l'une quelconque des revendications 1 à 12, dans lequel la tête (120) comprend des éléments de nettoyage de dent qui est constituée uniquement de la pluralité de crins (150) de l'unité de nettoyage monolithique (140).

14. Instrument de soins buccaux selon l'une quelconque des revendications 1 à 13, dans lequel la surface avant (121) de la tête (120) comprend une zone de touffetage ayant une densité de crins entre 0,55 et 0,85 crin par mm².
